# EUROPEAN PATENT APPLICATION

(11) **EP 1 813 701 A1**
(43) Date of publication of application: **01.08.2007**
(21) Application number: 05806980.8
(22) Date of filing: 17.11.2005
(51) Int. Cl.: D01F 9/21, D04H 1/42, D06C 7/04, H01M 4/92, H01M 4/96, H01M 8/10

(54) **CARBON FIBER, POROUS SUPPORT-CARBON FIBER COMPOSITE, PROCESS FOR PRODUCING THEM, CATALYST STRUCTURE, ELECTRODE FOR SOLID POLYMER FUEL CELL AND SOLID POLYMER FUEL CELL**

(30) Priority: 19.11.2004 JP 2004335714; 19.11.2004 JP 2004335732
(71) Applicant: Bridgestone Corporation, Tokyo 104-8340 (JP)
(72) Inventor: SUGI, Shinichiro, BRIDGESTONE CORPORATION, Kodaira-shi, Tokyo 187-8531 (JP); OHNO, Shingo, BRIDGESTONE CORPORATION, Kodaira-shi, Tokyo 187-8531 (JP); YOSHIKAWA, Masato, BRIDGESTONE CORPORATION, Kodaira-shi, Tokyo 187-8531 (JP)
(74) Representative: Whalley, Kevin
(86) International application number: PCT/JP2005/021114
(87) International publication number: WO 2006/054636

(57) **Abstract**

This invention relates to a method for producing carbon fibers having a sufficiently small fiber diameter, and more particularly to (1) a method for producing carbon fibers, which comprising the steps of jetting a polymer material-containing solution by an electrospinning method to form a deposit layer of a fibrous substance comprising the polymer material and firing the deposit layer of the fibrous substance comprising the polymer material to produce carbon fibers, and (2) a method for producing carbon fibers, which comprising the steps of jetting a carbon black-dispersed and polymer material-containing solution by an electrospinning method to form a deposit layer of a fibrous substance comprising the carbon black-dispersed polymer material and irradiating microwaves to the deposit layer of the fibrous substance to produce carbon fibers.

## Description

### TECHNICAL FIELD

This invention relates to carbon fibers, a porous support-carbon fiber composite and a method for producing the same, a catalyst structure using the porous support-carbon fiber composite obtained by this method, an electrode for a solid polymer fuel cell composed of the catalyst structure and a solid polymer fuel cell comprising the electrode, and more particularly to a method for producing carbon fibers and a porous support-carbon fiber composite having a high surface area.

### BACKGROUND ART

As the carbon fiber have hitherto been known pitch-based carbon fiber obtained by liquid phase carbonization, polyacrylonitrile-based and rayon-based carbon fibers obtained by solid phase carbonization, vapor-grown carbon fiber obtained by vapor phase carbonization, carbon nanotubes obtained by laser process or arc discharge process, and the like. In the production step of the pitch-based carbon fiber, polyacrylonitrile-based carbon fiber and rayon-based carbon fiber, it is necessary to take a spinning step for obtaining a fibrous precursor, so that the production steps become complicated and also it is difficult to obtain fibers having a size finer than 1 µm. In the production of the vapor-grown carbon fiber, there is a problem that it is not necessarily said to establish a mass production process because the production instrument is expensive and the yield is not high and the like. Even in the production of the carbon nanotubes, the production instrument is expensive and the efficient mass production technique is now being examined and there is a problem that it is difficult to obtain fibers having a size of more than 0.1 µm.

On the contrary, JP-A-H05-178603 discloses a method of producing carbonaceous powder without requiring an infusibilization step wherein it is possible to control the electric characteristics such as electric conductivity and the like and the residual carbon ratio is high and the electric conduction is excellent. In this method, however, polyaniline powder is used as a starting material, so that the carbon fiber is never obtained without the spinning step.

On the other hand, fuel cells lately come under the spotlight as a cell having a high power generation efficiency and a small environmental burden, and the research and development thereof are widely made. Among the fuel cells, solid polymer fuel cells are high in the power density and low in the working temperature and easy in the miniaturization and low in the cost as compared with the other type fuel cells, so that they are expected to become widely used as a power source for electric cars, a dispersion power generation system and a household cogeneration system. In the solid polymer fuel cell, a pair of electrodes are usually disposed so as to sandwich a solid polymer electrolyte membrane, while a fuel gas such as hydrogen or the like is contacted with a surface of one electrode and an oxygen-containing gas is contacted with a surface of the other electrode to generate an electrochemical reaction, whereby electric energy is taken out between the electrodes (see "Chemical review No. 49, Material Chemistry of New Type Cells", edited by The Chemical Society of Japan, Institute Publishing Center, 2001, p. 180-182 and "Solid Polymer Fuel Cells <2001>", The Technical Information Society, 2001, p. 14-15). Moreover, a catalyst layer is disposed at a side of the electrode contacting with the polymer electrolyte membrane, so that the electrochemical reaction occurs at a three-phase interface of the polymer electrolyte membrane, the catalyst layer and the gas. Therefore, it is necessary to enlarge a reaction field causing the electrochemical reaction in order to improve the power generation efficiency of the solid polymer fuel cell.

In order to form the catalyst layer capable of enlarging the electrochemical reaction field, there is generally adopted a method wherein a paste or a slurry containing catalyst powder formed by supporting a noble metal catalyst such as platinum or the like on a granular carbon such as carbon black or the like is applied onto a conductive and porous support such as a carbon paper or the like. However, there is still a room for improvement in a point of the power generation efficiency even in the solid polymer fuel cell comprising the catalyst layer formed by such a method, so that it is demanded to develop a catalyst layer capable of further enlarging the electrochemical reaction field.

### DISCLOSURE OF THE INVENTION

Under such a circumstance, it is an object of the invention to solve the above-mentioned problems of the conventional techniques and to provide a novel method for producing carbon fibers having a sufficiently small fiber diameter. Also, it is another object of the invention to provide a method for producing a porous support-carbon fiber composite formed by disposing such carbon fibers on a porous support. Moreover, it is the other object of the invention to provide a catalyst structure using such a porous support-carbon fiber composite, an electrode for a solid polymer fuel cell using the catalyst structure and a solid polymer fuel cell using the electrode.

The inventors have made various studies in order to achieve the above objects and discovered that (1) nano-order carbon fibers are obtained by forming a fibrous substance of a polymer material from a polymer material-containing solution by an electrospinning method and firing the fibrous substance, and also (2) nano-order carbon fibers are obtained in a short time by forming a fibrous substance of a carbon black-dispersed polymer material from a carbon black-dispersed and polymer material-containing solution by an electrospinning method and irradiating microwaves to the fibrous substance, and moreover a porous support-carbon fiber composite is obtained by forming the carbon fibers on a support, and furthermore a catalyst structure formed by supporting a metal on the porous support-carbon fiber composite serves as an electrode for a solid polymer fuel cell, and as a result the invention has been accomplished.

That is, the first method for producing carbon fibers according to the invention comprises the steps of:
jetting a polymer material-containing solution toward a support, a drum or a support disposed on a drum by an electrospinning method to form a deposit layer of a fibrous substance comprising the polymer material on the support, the drum or the support disposed on the drum; and
firing the deposit layer of the fibrous substance comprising the polymer material to produce carbon fibers.

Also, the second method for producing carbon fibers according to the invention comprises the steps of:
jetting a carbon black-dispersed and polymer material-containing solution toward a support, a drum or a support disposed on a drum by an electrospinning method to form a deposit layer of a fibrous substance comprising the carbon black-dispersed polymer material on the support, the drum or the support disposed on the drum; and
irradiating microwaves to the deposit layer of the fibrous substance comprising the carbon black-dispersed polymer material to fire the polymer material in the deposit layer to thereby produce carbon fibers.

In the first and second methods for producing carbon fibers according to the invention, as the support is preferable a porous support. Moreover, the carbon fibers according to the invention are characterized by producing through the first or second production method for carbon fibers.

The first method for producing a porous support-carbon fiber composite according to the invention comprises the steps of:
jetting a polymer material-containing solution toward a porous support by an electrospinning method to form a deposit layer of a fibrous substance comprising the polymer material on the porous support; and
firing the deposit layer of the fibrous substance comprising the polymer material to produce carbon fibers on the porous support.

Also, the second method for producing a porous support-carbon fiber composite according to the invention comprises the steps of:
jetting a carbon black-dispersed and polymer material-containing solution toward a porous support by an electrospinning method to form a deposit layer of a fibrous substance comprising the carbon black-dispersed polymer material on the porous support; and
irradiating microwaves to the deposit layer of the fibrous substance comprising the carbon black-dispersed polymer material to fire the polymer material in the deposit layer to thereby produce carbon fibers on the porous support.

Moreover, the porous support-carbon fiber composite according to the invention is characterized by producing through the first or second production method for the porous support-carbon fiber composite.

In a preferable embodiment of the first method for producing carbon fibers and the first method for producing a porous support-carbon fiber composite according to the invention, the firing of the deposit layer of the fibrous substance comprising the polymer material is conducted in a non-oxidizing atmosphere. Also, as the porous support is preferable a carbon paper.

In a preferable embodiment of the second method for producing carbon fibers and the second method for producing a porous support-carbon fiber composite according to the invention, the porous support is a carbon paper.

The catalyst structure according to the invention is formed by supporting a metal, preferably a metal containing at least Pt, more preferably a metal essentially consisting of Pt on the carbon fibers of the above-described porous support-carbon fiber composite. Also, the electrode for the solid polymer fuel cell according to the invention is composed of the catalyst structure. Moreover, the solid polymer fuel cell according to the invention is characterized by comprising the electrode for the solid polymer fuel cell.

According to the invention, (1) the carbon fibers having a sufficiently small fiber diameter can be produced by forming the fibrous substance of the polymer material from the polymer material-containing solution by an electrospinning method and firing the fibrous substance, and also the porous support-carbon fiber composite having a high surface area can be produced by conducting the formation of the carbon fibers on the porous support.

Furthermore, according to the invention, (2) the carbon fibers having a sufficiently small fiber diameter can be produced in a short time by forming the fibrous substance of the carbon black-dispersed polymer material from the carbon black-dispersed and polymer material-containing solution by an electrospinning method and irradiating microwaves to the fibrous material, and also the porous support-carbon fiber composite having a high surface area can be produced in a short time by conducting the formation of the carbon fibers on the porous support.

Moreover, according to the invention, there can be provided a catalyst structure comprising a metal supported on the porous support-carbon fiber composite and suitable for an electrode for a solid polymer fuel cell as well as a solid polymer fuel cell using the catalyst structure as an electrode.

### BRIEF DESCRIPTION OF THE DRAWINGS

FIG. 1 is a schematic view of an embodiment of the electrospinning apparatus used in the invention.
FIG. 2 is a sectional view of an embodiment of the solid polymer fuel cell according to the invention.
FIG. 3 is a graph showing a voltage-current characteristic of the solid polymer fuel cell of Example 1.
FIG. 4 is a graph showing a voltage-current characteristic of the solid polymer fuel cell of Example 2.

### BEST MODE FOR CARRYING OUT THE INVENTION

The invention will be described in detail below. The first method for producing the carbon fibers according to the invention comprises the steps of jetting a polymer material-containing solution toward a support, a drum or a support disposed on a drum by an electrospinning method to form a deposit layer of a fibrous substance comprising the polymer material and firing the deposit layer of the fibrous substance comprising the polymer material to produce the carbon fibers. The fibrous substance comprising the polymer material which can be produced by the electrospinning method is very small in the fiber diameter, so that the carbon fibers having a very small fiber diameter can be produced by firing the fibrous substance.

Also, the second method for producing the carbon fibers according to the invention comprises the steps of jetting a carbon black-dispersed and polymer material-containing solution toward a support, a drum or a support disposed on a drum by an electrospinning method to form a deposit layer of a fibrous substance comprising the carbon black-dispersed polymer material and irradiating microwaves to the deposit layer of the fibrous material comprising the carbon black-dispersed polymer material to fire the polymer material in the deposit layer to thereby produce the carbon fibers. The fibrous substance comprising the carbon black-dispersed polymer material which can be produced by the electrospinning method is very small in the fiber diameter, so that when the microwaves are irradiated to the fibrous substance, the carbon black dispersed in the polymer material absorbs the microwaves to generate heat and the polymer material is fired from the inside thereof, and as a result, the carbon fibers having a very small fiber diameter can be produced in a short time.

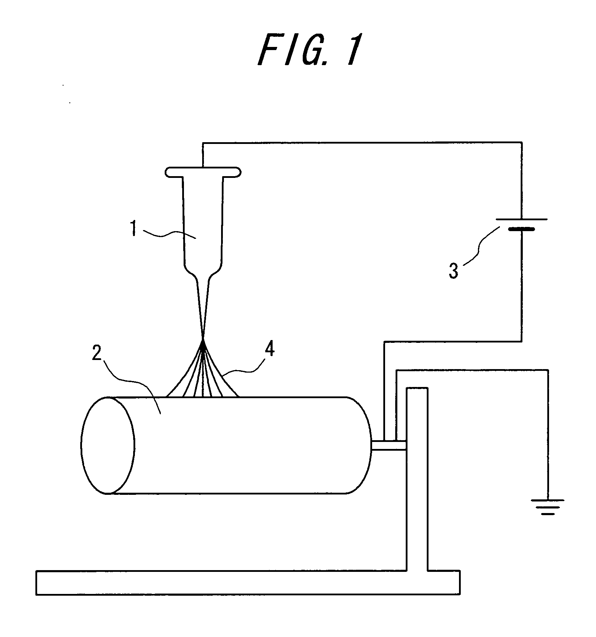

The electrospinning method (electrospray method) utilized in the first and second method for producing the carbon fibers according to the invention is known as a fiber-forming method using electric force. In FIG. 1 is shown a schematic view of an electrospinning apparatus utilized in the invention. In FIG. 1, when a high voltage of direct current is applied between a nozzle 1 feeding the polymer material-containing solution or the carbon black-dispersed and polymer material-containing solution and a drum 2 from a power source 3, the polymer material-containing solution or the carbon black-dispersed and polymer material-containing solution is jetted toward the drum 2, and further the polymer material or the carbon black-dispersed polymer material is adhered on the drum 2 by an electric field generated by the high voltage. In this case, the polymer material-containing solution or the carbon black-dispersed and polymer material-containing solution are jetted as micro-droplets from the nozzle 1 due to the surface tension thereof, but the droplets are repulsed with each other due to electric charge collected on the surface of the droplet. When the repulsive force of the electric charge exceeds the surface tension, the droplet is divided into jets 4. At this moment, a solvent in the polymer material-containing solution or the carbon black-dispersed and polymer material-containing solution is vaporized to further increase the repulsion force of the electric charge, and hence the jets 4 are further divided into fine jets 4. In these jets 4 is oriented the polymer material of the polymer material-containing solution or the carbon black-dispersed and polymer material-containing solution to render the polymer material or the carbon black-dispersed polymer material into an elongated fiber form, which comes and aggregates onto the drum 2 and as a result, a deposit layer composed of the fibrous substance of the polymer material or the carbon black-dispersed polymer material is formed on the drum 2. Moreover, the deposit layer composed of the fibrous substance of the polymer material or the carbon black-dispersed polymer material can be formed on a support or a support disposed on a drum by using the support instead of the drum 2 or disposing the support on the drum 2.

In the electrospinning method, nanofibers of the polymer material having desirable average diameter and average length can be obtained by properly selecting an applied voltage, a distance between the nozzle 1 and the drum 2 or the like, an outlet diameter of the nozzle 1, a composition of the polymer material-containing solution or the carbon black-dispersed and polymer material-containing solution and so on.

The applied voltage in the electrospinning method is not particularly limited, but is preferable to be within a range of 20-30 kV. When the applied voltage is less than 20 kV, the polymer material may not be sufficiently rendered into fibers, while when it exceeds 30 kV, it is dangerous to an apparatus and a human body.

The distance between the nozzle 1 and the drum 2 or the like in the electrospinning method varies depending on the applied voltage, viscosity and electric conductivity of the polymer material-containing solution or the carbon black-dispersed and polymer material-containing solution and so on, and is preferable to be within a range of 5-15 cm. When the distance between the nozzle 1 and the drum 2 or the like is less than 5 cm or exceeds 15 cm, good nanofibers of the polymer material or the carbon black-dispersed polymer material may not be obtained.

The outlet diameter of the nozzle 1 in the electrospinning method is not particularly limited, but is preferable to be within a range of 300-500 µm. When the outlet diameter of the nozzle 1 is less than 300 µm or exceeds 500 µm, good nanofibers of the polymer material or the carbon black-dispersed polymer material may not be obtained.

The polymer material-containing solution comprises a polymer material and a solvent. On the other hand, the carbon black-dispersed and polymer material-containing solution comprises a polymer material, carbon black and a solvent. As the polymer material can be used polymer materials commonly used as a raw material for carbon fibers, and are concretely mentioned polyacrylonitrile (PAN), cellulose, rayon, polycarbodiimide, polyvinyl acetate, polyvinyl alcohol, polystyrene, polyacrylic acid and so on. Also, the solvent is properly selected depending on a kind of the polymer material and includes, for example, N,N-dimethylformamide, formamide, dimethylsulfoxide, dioxane, alcohols such as methanol, ethanol and the like, ketones such as acetone, methyl ethyl ketone and the like, benzene, toluene, xylene, tetrahydrofuran and so on, and water can be used when the polymer material is soluble therein. Furthermore, the carbon black is not particularly limited and various grade ones can be used.

The concentration of the polymer material in the polymer material-containing solution and the carbon black-dispersed and polymer material-containing solution is not particularly limited, but is preferable to be within a range of 5-10% by mass. When the concentration of the polymer material in the solution is less than 5% by mass, the viscosity of the raw material solution is excessively low and it is difficult to form good fibers, while when it exceeds 10% by mass, the viscosity of the raw material solution is excessively high to deteriorate the workability and it is difficult to form good fibers.

The concentration of the carbon black in the carbon black-dispersed and polymer material-containing solution is not particularly limited, but is preferable to be within a range of 0.01-80% by mass. When the concentration of the carbon black in the solution is less than 0.01% by mass, microwaves cannot be sufficiently absorbed and it is difficult to serve as a heated body, while when it exceeds 80% by mass, the viscosity becomes high and it is difficult to form fibers (the electrospinning is impossible).

Then, in the first method for producing the carbon fibers according to the invention, the carbon fibers are obtained by firing the fibrous substance of the polymer material formed on the drum 2 or the like. In this case, the firing is preferably conducted in a non-oxidizing atmosphere. As the non-oxidizing atmosphere may be mentioned a nitrogen atmosphere, an argon atmosphere, a helium atmosphere or the like, but in some cases a hydrogen atmosphere may be used. Moreover, the non-oxidizing atmosphere may contain a small amount of oxygen as far as the fibrous polymer material is not completely oxidized. Also, the firing conditions are not particularly limited, but the firing is preferably conducted at a temperature between 500 and 3000°C for 0.5 to 6 hours.

Also, in the second method for producing the carbon fibers according to the invention, the carbon fibers are obtained by irradiating microwaves to the fibrous substance of the carbon black-dispersed polymer material to fire the fibrous substance. In the second method for producing the carbon fibers according to the invention, the carbon black is heated by the microwaves and the carbon black heats the polymer material from the inside thereof, so that the polymer material can be heated at a high speed. Therefore, according to the second method for producing the carbon fibers of the invention, the polymer material can be fired in a short time and the carbon fibers can be produced in a high productivity. The wavelength of the microwave used is preferable to be within a range of 0.1 to 100 cm and the frequency thereof is preferable to be within a range of 300 MHz to 30 GHz. Also, the irradiating conditions are not particularly limited, but the irradiating is preferably conducted at a high frequency such as 28 GHz or the like for 1 minute to 3 hours for suppressing an arcing. Moreover, the irradiating is preferably conducted under a non-oxidizing atmosphere or a reduced pressure for preventing the carbon paper and the polymer material from being oxidized.

Since the carbon fibers obtained as described above have a small fiber diameter, they are high in the surface area and excellent in the electric conduction. The carbon fibers preferably have a diameter of 100 to 3000 nm, a length of 0.1 to 10 µm, a surface resistance of 10⁶ to 10⁻² Ω and a residual carbon ratio of 10 to 90%.

In the production method of the carbon fibers, the polymer material-containing solution or the carbon black-dispersed and polymer material-containing solution is jetted toward the support, the drum or the support disposed on the drum by the electrospinning method, but the porous support-carbon fiber composite can be produced by jetting the polymer material-containing solution or the carbon black-dispersed and polymer material-containing solution onto the porous support. Moreover, the porosity of the carbon fiber portion in the composite can be controlled by properly adjusting various conditions in the electrospinning method.

The support and the drum need to have a good electric conduction. As the material of the drum are mentioned metals such as iron, stainless, aluminum and so on. As the material of the support are mentioned metals, graphite, a glass substrate or film with a transparent conductive membrane and the like. Also, the support is preferably a porous support. As the porous support are mentioned a carbon paper, a carbon nonwoven fabric, a carbon cloth, a carbon net, a meshed carbon and the like. Among them, the carbon paper is preferable.

The catalyst structure according to the invention is formed by supporting a metal, preferably metal microparticles on the carbon fibers of the above-mentioned porous support-carbon fiber composite. The catalyst structure can be used as a catalyst for various chemical reactions such as hydrogenation reaction and the like as well as an electrode for a solid polymer fuel cell. As the metal to be supported on the composite is preferable a noble metal, and Pt is particularly preferable. In the invention, Pt may be used alone or may be used as an alloy with another metal such as Ru or the like. By using Pt as a metal and using the catalyst structure of the invention as an electrode for a solid polymer fuel cell can be oxidized hydrogen in a high efficiency even at a low temperature of not higher than 100°C. Also, by using the alloy of Pt with Ru or the like can be prevented the poisoning of Pt with CO to prevent the lowering of the catalyst activity. Moreover, when the metal supported on the carbon fibers of the composite is in the form of microparticles, the particle size thereof is preferably within a range of 0.5 to 100 nm, and more preferably within a range of 1 to 50 nm. The metal may also be in the form of fiber, wire or thin film. The supporting ratio of the metal is preferably within a range of 0.01 to 1 mg per 1 cm² of projected area of the carbon fibers in the composite. The method for supporting the metal on the carbon fibers is not particularly limited, but includes, for example, an impregnation method, an electroplating method (electrolytic reduction method), an electroless plating method, a sputtering method and the like. Moreover, after plural kinds of metals are supported on the carbon fibers, a part of the metals supported may be dissolved with an acid and/or an alkali to expand a surface area of the metal supported.

The electrode for the solid polymer fuel cell according to the invention is the above catalyst structure, i.e. the catalyst structure formed by supporting the metal on the carbon fibers of the above-mentioned composite, and comprises a gas diffusion layer and a catalyst layer. In the electrode for the solid polymer fuel cell according to the invention, the porous support of the composite corresponds to the gas diffusion layer, and the metal-supported carbon fibers correspond to the catalyst layer. Since the electrode for the solid polymer fuel cell according to the invention uses the above-mentioned porous support-carbon fiber composite having a high surface area and the metal is supported on the carbon fibers having such a high surface area, the reaction field for the electrochemical reaction at a three-phase interface among the solid polymer electrolyte membrane, the catalyst layer and the gas is highly enlarged, and the utilization efficiency of the catalyst is high and the catalytic activity of the catalyst layer is high.

It is preferable to impregnate a polymer electrolyte into the catalyst layer. As the polymer electrolyte can be used an ion-conductive polymer. As the ion-conductive polymer may be mentioned a polymer having an ion exchanging group such as sulfonic acid, carboxylic acid, phosphonic acid, phosphonous acid or the like, in which the polymer may contain or may not contain fluorine. As the ion-conductive polymer are concretely preferable perfluorocarbon sulfonic acid based polymers and the like such as Naphion (registered trade mark) and so on. The amount of the polymer electrolyte impregnated is preferable to be within a range of 10 to 500 parts by mass per 100 parts by mass of the carbon fibers in the catalyst layer. The thickness of the catalyst layer is not particularly limited, but is preferably within a range of 0.1 to 100 µm. The amount of the metal supported in the catalyst layer is determined by the supporting ratio and the thickness of the catalyst layer, and is preferably within a range of 0.001 to 0.8 mg/cm².

The gas diffusion layer is a layer for feeding a hydrogen gas or an oxidizer gas such as oxygen, air or the like to the catalyst layer to give and receive the resulting electrons, and plays a role as a layer for diffusing gas and a current collector.

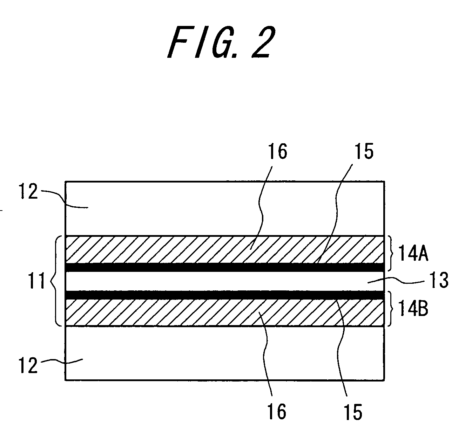

The solid polymer fuel cell according to the invention is characterized by comprising the electrode for the solid polymer fuel cell. The solid polymer fuel cell according to the invention will be described in detail below with reference to FIG. 2. The illustrated solid polymer fuel cell comprises a membrane electrode assembly (MEA) 11 and separators 12 disposed on both sides thereof. The membrane electrode assembly (MEA) 11 is comprised of a solid polymer electrolyte membrane 13 and a fuel electrode 14A and an air electrode 14B disposed on both sides thereof. In the fuel electrode 14A, a reaction represented by 2H₂ → 4H⁺ + 4e⁻ occurs, and the generated H⁺ is transferred to the air electrode 14B through the solid polymer electrolyte membrane 13 and the generated e⁻ is taken outside to be a current. On the other hand, in the air electrode 14B, a reaction represented by O₂ + 4H⁺ + 4e⁻ → 2H₂O occurs, and water is generated. At least one of the fuel electrode 14A and the air electrode 14B is the above-mentioned electrode of the solid polymer fuel cell according to the invention. Moreover, each of the fuel electrode 14A and the air electrode 14B comprises a catalyst layer 15 and a gas diffusion layer 16, in which the catalyst layer 15 is arranged so as to contact with the solid polymer electrolyte membrane 13.

In the solid polymer fuel cell according to the invention, the electrode for the solid polymer fuel cell according to the invention formed by supporting the metal on the porous support-carbon fiber composite is used in at least one of the fuel electrode 14A and the air electrode 14B, so that the reaction field for the electrochemical reaction at a three-phase interface among the solid polymer electrolyte membrane 13, the catalyst layer 15 and the gas is very large, and hence the power generation efficiency of the solid polymer fuel cell is highly improved.

As the solid polymer electrolyte membrane 13 can be used an ion-conductive polymer, and as the ion-conductive polymer can be used ones mentioned as the polymer electrolyte which may be impregnated into the catalyst layer. As the separator 12 can be used a usual separator wherein flow channels (not shown) for fuel, air, generated water or the like are formed on its surface.

### <EXAMPLES>

The following examples are given in illustration of the invention and are not intended as limitations thereof.

### (Example 1)

A commercially available aqueous solution of 35 wt% of polyacrylic acid [manufactured by Aldrich] is diluted to prepare a solution containing 10 wt% of polymer material. A deposit layer of nanofibers is formed on a carbon paper [manufactured by Toray Industries, Inc.] under the following conditions by using the polymer material-containing solution according to the electrospinning method shown in FIG. 1 (electrospinning conditions: applied voltage: 20 kV, distance between a tip of a capillary and a substrate: 15 cm). As the membrane thus obtained is observed through SEM, it is confirmed that fibers of polyacrylic acid are obtained at an entangled state. The deposit layer is subjected together with the carbon paper to a firing treatment by heating up to 900°C at a temperature rising rate of 7°C/min in an Ar atmosphere and then keeping at 900°C for 1 hour. As the fired product is observed through SEM, it is confirmed that carbon fibers having a diameter of 1 to 2 µm are obtained on carbon fibers constituting the carbon paper in almost the same form as before the firing.

Then, the carbon paper having the carbon fibers on its surface is placed as a working electrode in an aqueous solution of 3 wt% of chloroplatinic acid, and a platinum plate is used as a counter electrode, and the electroplating is carried out at a room temperature and a constant current of 30 mA/cm² for 25 seconds to precipitate platinum on the carbon fibers, and as a result, a catalyst structure having a platinum-supporting amount of 0.4 mg/cm² is formed on the carbon paper.

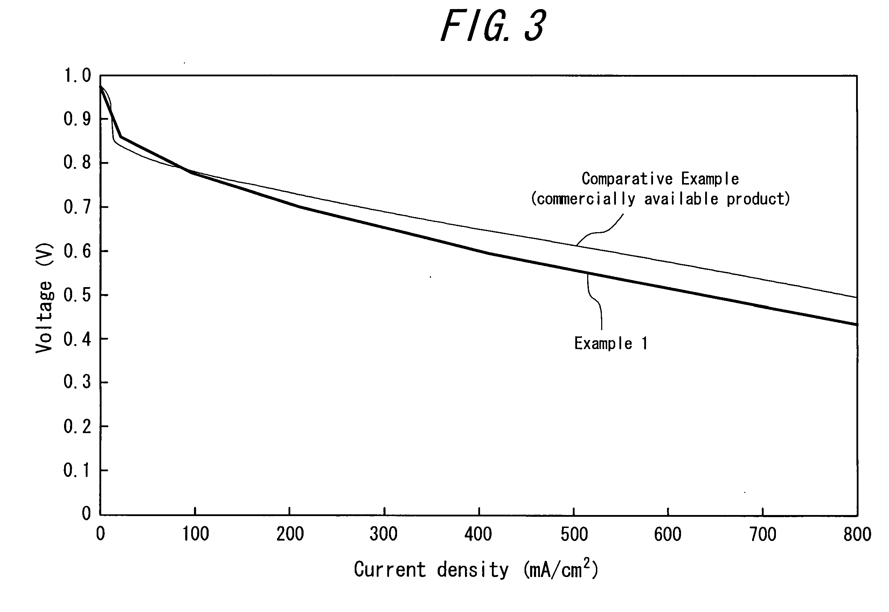

A solution of 5 wt% of Naphion (registered trade mark) is applied to the catalyst structure formed on the carbon paper and dried to form a catalyst layer on the carbon paper. Then, the carbon paper provided with the catalyst layer is arranged so as to contact the catalyst layer with each face of a solid polymer electrolyte membrane (thickness: 175 µm) made of Naphion (registered trade mark), which are hot-pressed to prepare a membrane electrode assembly. The membrane electrode assembly is incorporated into a test cell made by Electro Chemical Co., Ltd. (EFC25-01SP) to prepare a solid polymer fuel cell. The voltage-current characteristic of the fuel cell is measured under conditions that hydrogen is 300 cc/min, oxygen is 300 cc/min, cell temperature is 80°C and humidity temperature is 80°C. The result is shown in FIG. 3 together with the result of the commercially available product. As a result, although the platinum-supporting amount is small, the level of performance equal to that of the commercially available product is obtained.

### (Example 2)

A commercially available aqueous solution of 35 wt% of polyacrylic acid [manufactured by Aldrich] is diluted and a commercially available carbon black is dispersed therein to prepare a polymer material-containing solution containing 10 wt% of polyacrylic acid and 20 wt% of carbon black. A deposit layer of nanofibers is formed on a carbon paper [manufactured by Toray Industries, Inc.] under the following conditions by using the polymer material-containing solution according to the electrospinning method shown in FIG. 1 (electrospinning conditions: applied voltage: 20 kV, distance between a tip of a capillary and a substrate: 15 cm). As the membrane thus obtained is observed through SEM, it is confirmed that fibers of polyacrylic acid are obtained at an entangled state. The deposit layer is subjected together with the carbon paper to a firing treatment by irradiating microwaves of 28 GHz under a reduced pressure for 1 hour. As the fired product is observed through SEM, it is confirmed that carbon fibers having a diameter of 1 to 2 µm are obtained on carbon fibers constituting the carbon paper in almost the same form as before the firing.

Then, the carbon paper having the carbon fibers on its surface is placed as a working electrode in an aqueous solution of 3 wt% of chloroplatinic acid, and a platinum plate is used as a counter electrode, and the electroplating is carried out at a room temperature and a constant current of 30 mA/cm² for 25 seconds to precipitate platinum on the carbon fibers, and as a result, a catalyst structure having a platinum-supporting amount of 0.4 mg/cm² is formed on the carbon paper.

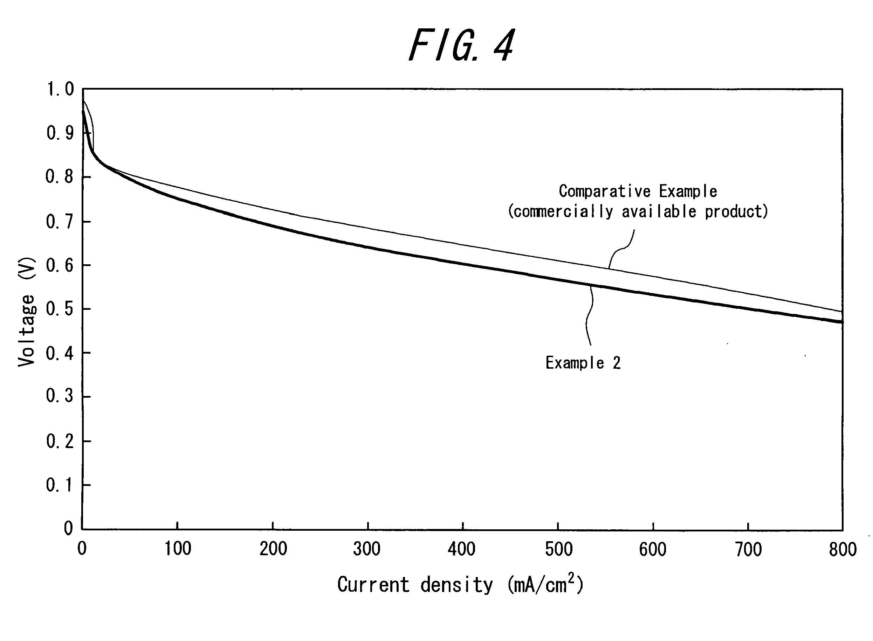

A solution of 5 wt% of Naphion (registered trade mark) is applied to the catalyst structure formed on the carbon paper and dried to form a catalyst layer on the carbon paper. Then, the carbon paper provided with the catalyst layer is arranged so as to contact the catalyst layer with each face of a solid polymer electrolyte membrane (thickness: 175 µm) made of Naphion (registered trade mark), which are hot-pressed to prepare a membrane electrode assembly. The membrane electrode assembly is incorporated into a test cell made by Electro Chemical Co., Ltd. (EFC25-01SP) to prepare a solid polymer fuel cell. The voltage-current characteristic of the fuel cell is measured under conditions that hydrogen is 300 cc/min, oxygen is 300 cc/min, cell temperature is 80°C and humidity temperature is 80°C. The result is shown in FIG. 4 together with the result of a commercially available product. As a result, it is confirmed that the level of performance equal to that of the commercially available product is obtained.

## Claims

1. A method for producing carbon fibers, which comprising the steps of:
jetting a polymer material-containing solution toward a support, a drum or a support disposed on a drum by an electrospinning method to form a deposit layer of a fibrous substance comprising the polymer material on the support, the drum or the support disposed on the drum; and
firing the deposit layer of the fibrous substance comprising the polymer material to produce carbon fibers.

2. A method for producing carbon fibers according to claim 1, wherein the firing of the deposit layer of the fibrous substance comprising the polymer material is conducted in a non-oxidizing atmosphere.

3. A method for producing carbon fibers, which comprising the steps of:
jetting a carbon black-dispersed and polymer material-containing solution toward a support, a drum or a support disposed on a drum by an electrospinning method to form a deposit layer of a fibrous substance comprising the carbon black-dispersed polymer material on the support, the drum or the support disposed on the drum; and
irradiating microwaves to the deposit layer of the fibrous substance comprising the carbon black-dispersed polymer material to fire the polymer material in the deposit layer to thereby produce carbon fibers.

4. A method for producing carbon fibers according to claim 1 or 3, wherein the support is a porous support.

5. A method for producing carbon fibers according to claim 4, wherein the porous support is a carbon paper.

6. Carbon fibers produced by a method as claimed in any one of claims 1-5.

7. A method for producing a porous support-carbon fiber composite, which comprising the steps of:
jetting a polymer material-containing solution toward a porous support by an electrospinning method to form a deposit layer of a fibrous substance comprising the polymer material on the porous support; and
firing the deposit layer of the fibrous substance comprising the polymer material to produce carbon fibers on the porous support.

8. A method for producing a porous support-carbon fiber composite according to claim 7, wherein the firing of the deposit layer of the fibrous substance comprising the polymer material is conducted in a non-oxidizing atmosphere.

9. A method for producing a porous support-carbon fiber composite, which comprising the steps of:
jetting a carbon black-dispersed and polymer material-containing solution toward a porous support by an electrospinning method to form a deposit layer of a fibrous substance comprising the carbon black-dispersed polymer material on the porous support; and
irradiating microwaves to the deposit layer of the fibrous substance comprising the carbon black-dispersed polymer material to fire the polymer material in the deposit layer to thereby produce carbon fibers.

10. A method for producing a porous support-carbon fiber composite according to claim 7 or 9, wherein the porous support is a carbon paper.

11. A porous support-carbon fiber composite produced by a method as claimed in any one of claims 7-10.

12. A catalyst structure formed by supporting a metal on carbon fibers of a porous support-carbon fiber composite as claimed in claim 11.

13. A catalyst structure according to claim 12, wherein the metal is at least Pt.

14. An electrode for a solid polymer fuel cell, which is composed of a catalyst structure as claimed in claim 12 or 13.

15. A solid polymer fuel cell comprising an electrode as claimed in claim 14.
